# EUROPEAN PATENT SPECIFICATION

(11) **EP 2 803 877 B1**
(45) Date of publication and mention of the grant of the patent: **12.09.2018**
(21) Application number: 13168112.4
(22) Date of filing: 16.05.2013
(51) Int. Cl.: F16D 3/38

(54) **Cardan joint supported with central unit**
Mit einer Zentraleinheit gestütztes Kardangelenk
Joint de cardan supporté avec unité centrale

(43) Date of publication of application: 19.11.2014
(73) Proprietor: Tirsan Kardan Sanayi Ve Ticaret Anonim Sirketi, 45030 Manisa (TR)
(72) Inventor: Tasan, Korkut, 45030 Manisa (TR)
(74) Representative: Yamankaradeniz, Kemal

(56) References cited:
- DE-C- 826 222
- FR-A1- 2 611 017
- FR-A5- 2 244 377
- US-A- 2 984 997

## Description

### The Related Art

The invention relates to developments revealed in cardan joint used on motorised vehicles in many more fields of application, chiefly in sectors such as automotive, machinery production, can be available on both ends or in the centres of cardan shafts, doing the job of transmitting the rotation motion and torque produced by engine in a way that will allow formation of an angle of a certain degree between axes of rotation.

The invention is particularly about a new cardan joint embodiment where loads on bearings acting on the spider and the arms thereof are decreased, life of the joint is elongated and spinning speeds of the cardan shaft are increased via resisting axial forces by means of a support member positioned through the center of the spider.

### The Prior Art

Cardan joints are special designs useful for achievement of angular motion between shafts that transmit torque and rotation motion. While cardan joints are used mainly in sectors such as automotive, machinery production, they have had a highly dense rate of usage in a great number of other fields for a long time as well. Due to their having a broad range of usage and history of their essential design dating back to very ancient times, many studies have been carried out on cardan joints, different assembly and production methods have been devised.

Basic design of cardan joints comprise 2 yoke pieces comprising different types of connection and bodies, and special bearings with 4 arms in form of a "plus" known as spider located among such pieces and providing reciprocal motion of the arms thereof as well as embodiments formed via linking of them with both yoke pieces. There is a 90° angle on axis of rotation between the yoke pieces matched with reciprocal arms of the spider and the special type of bearings.

In applications where cardan joint gets bended with excess angle, joint types known in the literature as double cardan joint are used instead of single cardan joint since the joint causes too much vibration and oscillation of angular velocity. In embodiment of most of these cardan shafts, there are provided spherical embodiments for centring purpose that allow inlet and outlet pieces to make an equal angle with the main body. As an example of these embodiments, there are patents such as US2984997, DE102005053362A1, FR2955161A1, US2003228920A1, US2008280689A1, and so on. The greatest difference of these embodiments from the embodiment of the invention is that it is based on the principle of linking up of two cardan joints.

Spherical embodiment positioned in the centre provides linking up of sequentially positioned joints onto the main body each time with congruent angle. In the literature, these types of joints are termed "self-centring double cardan joints". Spherical member is not generally expected to carry loads or to block axial forces applied on spider joint bearings. A further difference is that the spherical member contained in double cardan joint embodiment is found between two spider joints. As one spider joint was used in invention's embodiment, wherein spherical joint being positioned to the centre of universal joint (M).

Spider piece, on which special type of bearing runs over its arms has the weakest geometry in cardan joint embodiment. Angular velocity and torque on cardan shaft are transmitted from one piece to the other cardan shaft via this piece. In addition to angular velocity and torque, in same cases axial forces along the cardan shaft are also transmitted over arms of spider to the other cardan shaft. Particularly on motorised vehicles where cardan shafts are employed, axial forces produced on cardan shaft with acting of suspension movement lead to put stress on spider's arms. Maximum torque value that can be carried by the spider, which is stipulated in computations that it will be exposed to only radial torque, becomes low since it is exposed to stress in axial direction together with radial torques in the direction of rotation under running conditions. In order for spider to also meet axial loads, it requires being designed according to much higher values than what is stipulated.

Spider bearings, produced in special type, acting on spider's arms are exposed to irregular additional loads due to stresss produced in axial direction and over time abrasions and deformations occur in the areas where bearing rollers work. These abrasions and deformations occurring reduce working life of cardan joint significantly.

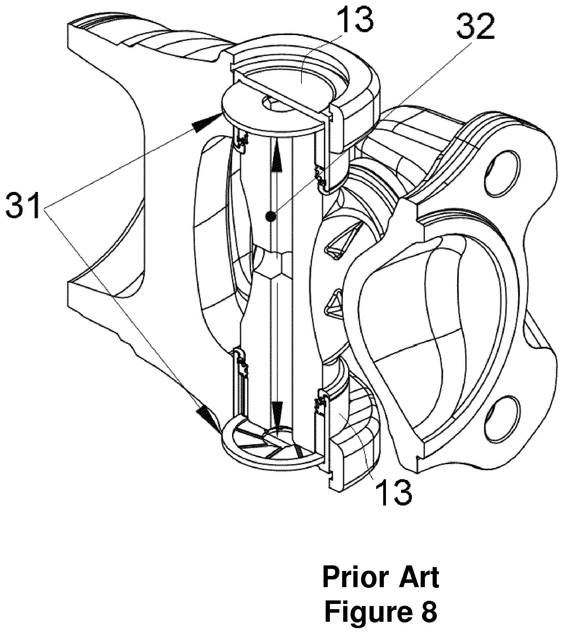

In Figure 8, a three dimensional, cross-sectional view of a cardan shaft according to prior art is given. In this embodiment, thrust (32) is caused by spider on spider bearings in cases where embodiments acts angularly. In order for it to resist the thrust (32) occurring, base washer (31) is placed inside spider bearing (13) in existing embodiments.

### Purpose of the Invention

The present invention relates to a new embodiment meeting above disclosed requirements, eliminating all of the disadvantages, bringing some additional advantages and formed through addition of a spherical joint to the centre of cardan joint.

A purpose of the invention is designation of the central area of the spider piece constituting the main component of cardan joint as empty and to reveal a new cardan joint embodiment where spherical joint connected to cardan shafts from front or rear or to the yoke pieces constituting connection flanges, is positioned within this spacing created.

Exposure of bearings acting on spider and arms thereof to radial loads only in the direction of rotation torque has been targeted by supporting axial forces that will fall upon the embodiment, by means of spherical - joint support member positioned as overlapping with centre of cardan joint bending center.

Another purpose of the invention is both to increase total torque that joint can bear and to achieve elongation of working life of the joint through prevention of deformation by wearing out less, by means of providing more comfortable operation of spider bearings.

A further purpose of the invention, on the other hand, is to achieve centring of cardan shaft on the axis of rotation and operation of cardan shaft under less vibration by means of spherical joint positioned in the centre of axis of rotation on both ends of cardan shaft. A cardan shaft that produces less vibration can work at higher speeds.

With this invention, it is also targeted to prevent the build-up of axial loads created by spider on spider bearings by achieving homocentric rotation of inlet and outlet connection members.

A further purpose of the invention is elimination of the need felt for utilisation of base washer inside spider bearing.

By means of the jointed support member developed with the invention, it is targeted to prevent of thrust of the spider on spider bearings by achieving homocentric rotation of yoke flange and of tube yoke.

The structural and characteristic properties and all of its advantages of the invention will be understood more clearly from the drawings provided below and from the detailed description written by making references to these drawings and therefore the assessment should be made by taking these drawings and the detailed description into account.

### Brief Description of the Drawings

To understand the embodiment and the advantages of the present invention with the additional elements in the best way, it should be evaluated together with the figures whose descriptions are made below.
Figure 1 is a perspective view of central unit supported cardan joint which is the subject of the invention.
Figure 2 is a three dimensional view of a cross-section of central unit supported cardan joint which is the subject of the invention.
Figure 3 is a cross-sectional view of central unit supported cardan joint which is the subject of the invention in straight position.
Figure 4 is a cross-sectional view of central unit supported cardan joint which is the subject of the invention from side profile, in angular position.
Figure 5 is a three dimensional view of spider embodiment comprising a spacing in the centre part thereof.
Figure 6 is three dimensional views of flange yoke and tube yoke.
Figure 7 is a three dimensional view spherical joint support member in disassembled form.
Figure 8 is a three dimensional, cross-sectional view of cardan joint of the prior art.

The drawings need not absolutely be put to scale the details not necessary to understand the invention may have been omitted. Furthermore, the elements that are at least substantially identical, or at least have substantially identical functions are indicated with the same number.

### Reference Numbers

**1.** Cardan Joint
**10.** Flange Yoke
**11.** Tube Yoke
**12.** Spider
**13.** Spider Bearing
**14.** Cardan Shaft Tube
**15.** Spider Hub Spacing
**16.** Roller Bearing Bushing
**17.** Support Member Bushing (Flange Yoke)
**18.** Support Member Bushing (Tube Yoke)
**20.** Spherical Joint Support Member
**21.** Spherical Headed Male Piece
**22.** Spherical Bushing Female Piece
**23.** Sphere
**24.** Spherical Bushing
**25.** Hausing cylinder
**31.** Base Washer
**32.** Thrust
**M.** Piece Centre

### Detailed Description of the Invention

In this detailed description, preferred embodiments of the cardan joint (1) comprising a spherical joint support member (20), which is the subject of the invention, are described only for a better understanding of the subject-matter and in a way not constituting any limiting effect.

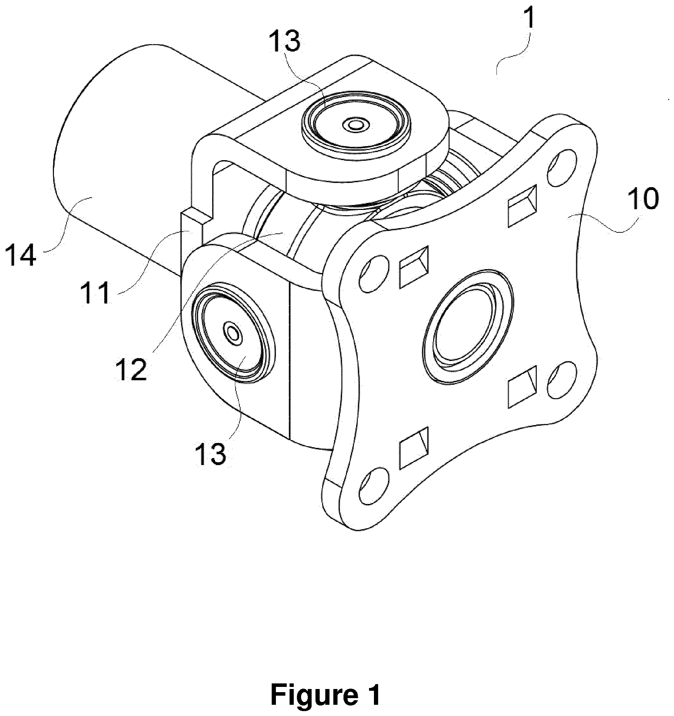

The invention relates to developments revealed in cardan joint used on motorised vehicles in many more fields of application, chiefly in sectors such as automotive, machinery production, can be available on both ends or in the centres of cardan shafts, doing the job of transmitting the rotation motion and torque produced by engine in a way that will allow formation of an angle of a certain degree between axes of rotation. In Figure 1, a three dimensional view of the cardan joint (1) which is the subject of the invention is given.

Specialty of the invention is that it is a cardan joint (1) embodiment where loads on bearings (13) acting on the spider (12) and the arms thereof are decreased, life of the joint (1) is elongated and spinning speeds of the cardan shaft are increased via meeting axial forces by means of a spherical joint support member (20) positioned through the center of the spider (12).

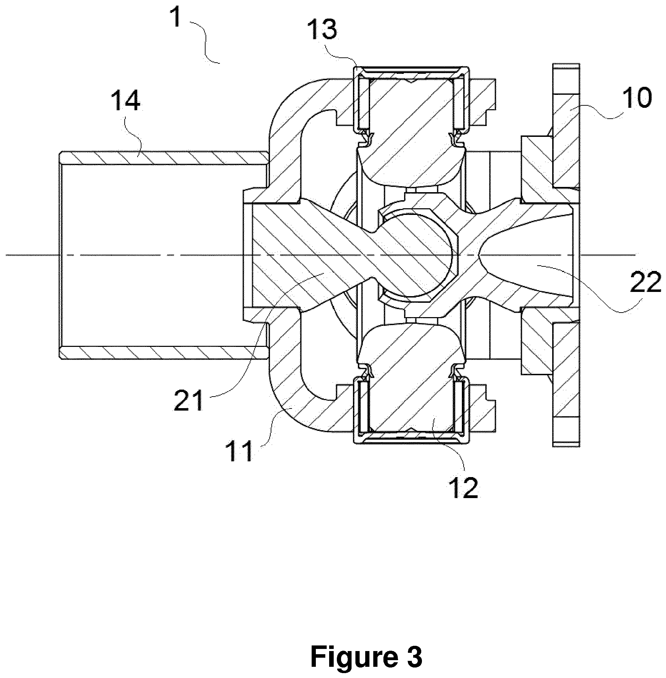

As will be seen from its cross-section is Figure 3, the cardan joint (1) which is the subject of the invention is comprised of a spider (12) having arms in form of a plus in the centre and flange yoke and tube yoke (10,11) in different geometry linked with spider bearings (13) located on reciprocal arms of said spider (12). Spider bearings (13) make a spinning motion inside the roller bearing bushings (16) located on flange yoke and tube yoke (10,11). As the flange yoke (10) member and the cardan joint (1) can be connected to another connection piece by use of various fixing members, they can also be welded onto cardan shaft tube (14) of cardan joint (1) by use of tube yoke (11) member.

While flange yoke (10) as well as transmission box of cardan shaft used on vehicles can be connected to pieces such as differential flange, intermediate bearing flange via connecting members bolts and nuts, they can be welded to cardan shaft tube (14) with tube yoke (11).

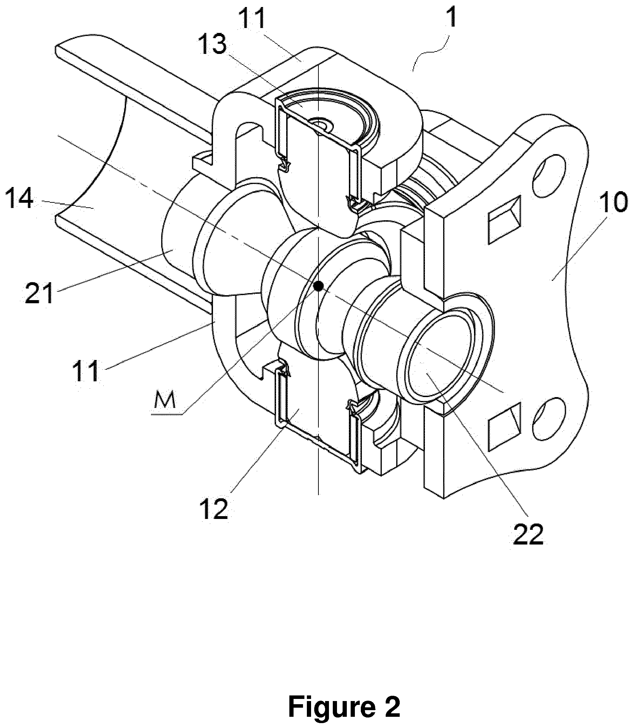

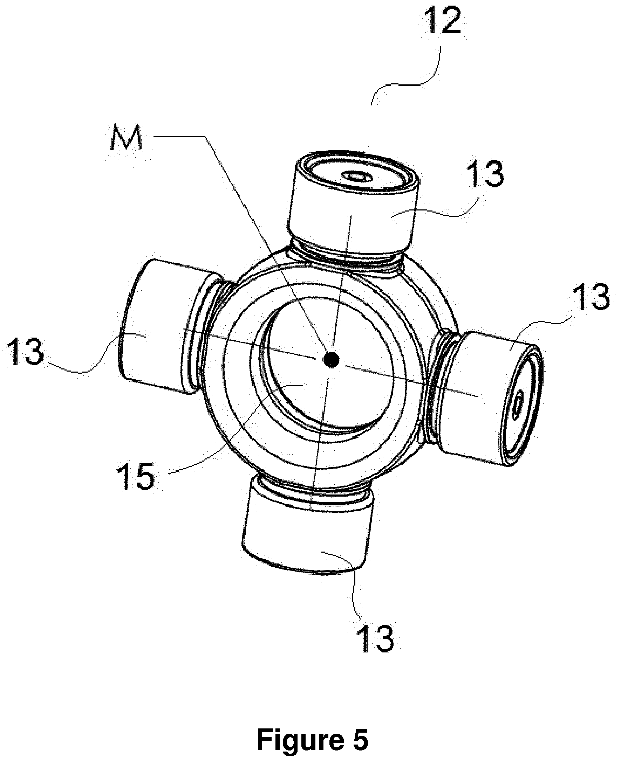

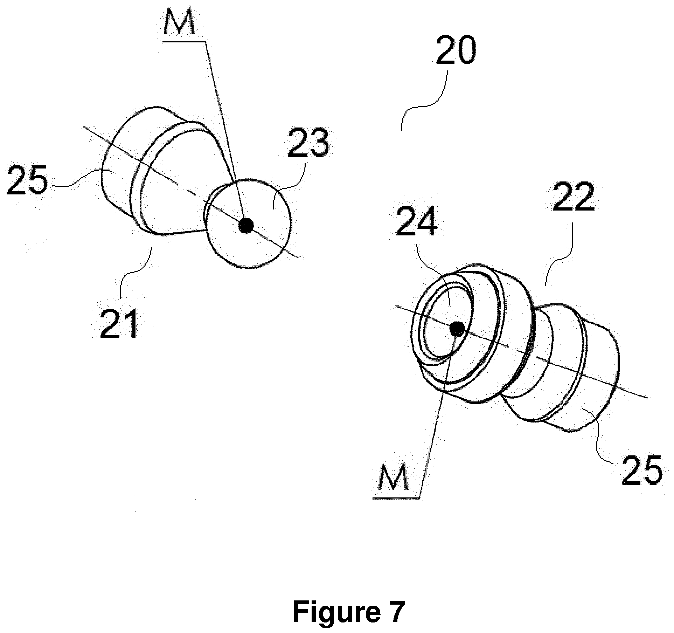

In Figure 2, a perspective, cross-sectional view of a preferred embodiment of the cardan joint (1) embodiment which is the subject of the invention has been given. In this embodiment, the spider (12) which is one of the essential elements of the joint (1) has been designed, as it will also be seen from Figure 5, in a way comprising circular spider spacing (15) in the central hub section thereof. Inside said spider hub spacing (15), a support member (20) has been positioned in a way coincident with spacing (15) centres (M). Spherical joint support member (20) being one of the essential elements of the invention is comprised of a spherical headed male piece (21) and a spherical bushing female piece (22). While one side of spherical headed male piece (21) has a spherical (23) form, it has a hausing cylinder (25) on the other side contained thereto. While one side of the spherical bushing female piece (21) has a geometry comprising a spherical bushing (24) form in itself, it has a hausing cylinder (25) form similar to the spherical headed female piece (21) on the other side of itself contained. In Figure 7, there is found a perspective view of spherical joint support member (20) in disassembled state.

In practice, spherical headed male piece (21) and spherical bushing female piece (22) are in embedded state. The sphere (23) contained in geometry of spherical headed male piece (21) is located inside spherical bushing (24) of spherical bushing female piece (22) and homocentric (M) sphere and spherical bushing (23,24) are capable of moving by sliding over one another. The sphere (23) contained in geometry of spherical joint support member (20) and the centre (M) of spherical bushing (24) is at the same time the centre of axis of rotation of the shafts with which cardan joints (1) is in connection. This centre (M) indicated in Figure 2 is at the same time centre of bending of the system in which cardan joint (1) is contained.

Spherical joint support member (20) has been embedded to circular bushing (17) located on flange yoke and tube yoke (10,11) generally connected with a shaft by means of hausing cyclinder (25) located on both ends thereof in a way being homocentric with the cardan joints (1).

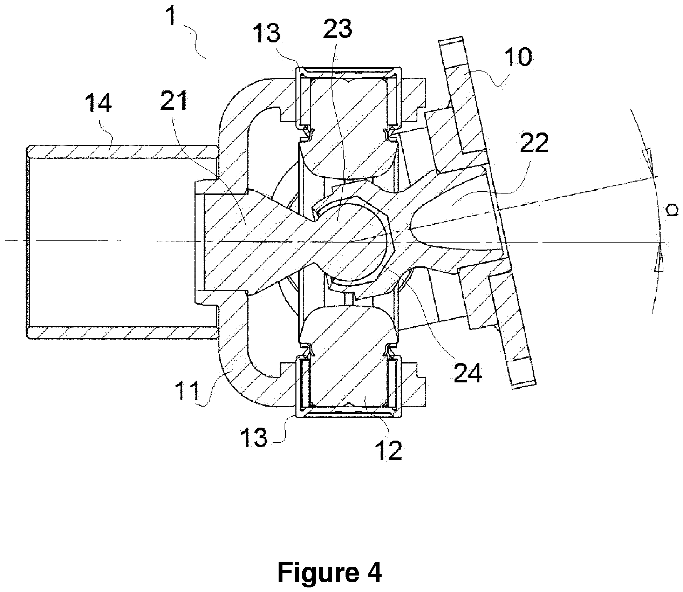

As shown in a cross-sectional, side profile view of a preferred embodiment of cardan joint (1) in Figure (1), in cases where it is positioned angularly, spherical joint support member (20) being homocentric with the shafts connected with the joint (1) is also found in angular position in the same way. Transition of the joint form straight position indicated in Figure 3 to angular position indicated in Figure 4 is achieved via spherical headed male piece (21) and spherical bushing female piece (22) constituting spherical joint support member's hanging positions by sliding one over another. In traditional cardan joint embodiment, axial forces transferred from one flange yoke (10) to another tube yoke (11) over spider's arms are transferred to another piece over spherical joint support member (20) in invention's embodiment. Thus, load and service life that can be carried by spider (12) which is exposed only to radial torque loads in the direction of rotation are increased.

As will be understood from the perspective views of cardan joint (1), which is the subject of the invention, in straight positioned state in Figure 3, and angularly positioned state in Figure 4, spherical joint supported member (20) and cardan joint (1) work homocentric. For example; if cardan joint inclines as much angle (α) in Figure 1, cardan joint's support member working homocentric also inclines as much angle (α). The angle that cardan joint (1) forms with spider bearings (13) is similarly supported with spherical joint support member (20) as well.

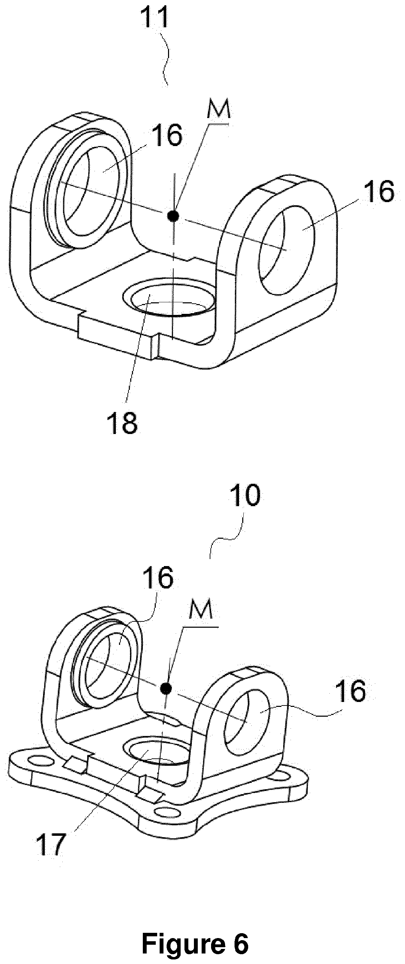

Over geometry of spherical joint support member (20), there is found hausing cylinder (25) each. The spherical joint support member (20) has been positioned, on one hand, to a bushing (17) located on flange yoke (10) by means of said hausing cylinder (25) and to a bushing (18) located on tube yoke (11) in a way being homocentric with said flange yoke and tube yoke (10,11). Thus, thrust (32) created on spider's bearings (13) by the spider (12) is supported by provision of homocentric rotation of flange yoke (10) and tube yoke (11) whose three dimensional views are contained in Figure 6. A base washer (31) is placed into spider bearing (13) in embodiments used in the prior art, in order for it to meet the thrust (32). As described above, spherical joint support member (20) contained in invention's embodiment eliminates the need for a base washer by preventing formation of the thrusts (32) on spider bearing (13).

By means of spherical joint support member (20) positioned in the centre of the axis of rotation of cardan shafts with which cardan joint (1) in connection, centring of cardan shaft on axis of rotation and operation of the shaft under less vibration have been achieved. A cardan shaft capable of producing less vibration can work at higher speeds.

By means of spherical joint support member (20) of cardan joint (1) positioned coincidently with centre of bending, exposure of bearings (13) acting on spider (12) and arms thereof to radial loads only in the direction of rotation torque has been achieved by meeting axial forces arising during operation of the system. As more comfortable operation of bearings (13) increases total torque that can be carried by joint, it also elongates working life of the joint by preventing deformation by wearing out less.

In addition to being usable on cardan shafts, the cardan joint (1), which is the subject of the invention, comprising a spherical joint support member (20) is also suitable for use on other machinery and systems where there are torque and rotation motion applications.

## Claims

1. A cardan joint (1) which is adapted to be located on two cardan shafts for transmitting rotational motion and torque on motorised vehicles, the cardan joint comprising: a spider (12) which is adapted to be linked to the two cardan shafts; a spherical joint support member (20) which is positioned in the center of the spider (12), wherein the spherical joint support member (20) is comprised of a sphere (23) and a spherical bushing female piece (22) which has a bushing geometry that is suitable for said sphere (23), and wherein the sphere (23) and the spherical bushing female piece (22) are capable of sliding one over the other,
the cardan joint (1) being **characterized in that** in order to have axial forces being transferred by means of the spherical joint support member (20), the centre (M) of the spherical joint support member (20) is coincident with the centre (M) of bending of the cardan joint (1) and the spherical joint member (20) is fixed in the axial direction relative to each of the two cardan shafts during operation.

2. A cardan joint (1) according to Claim 1, **characterised by** further comprising; two yoke pieces (10,11) which are linked to the spider (12), wherein the two yoke pieces (10,11) are respectively located at the inlet and the outlet of the cardan joint (1), and wherein the spherical joint support member (20) is homocentrically (M) connected to the two yoke pieces (10,11).

3. A cardan joint (1) according to Claim 1 to 2, and it is **characterised in that**; it blocks the thrust (32) created on spider bearings (13) by the spider (12) by means of homocentrical rotation of flange yoke (10) and of tube yoke (11).

## Patentansprüche

1. Kardangelenk (1), das angepasst ist, zum Übertragen von Drehbewegung und Drehkraft an motorisierten Fahrzeugen an zwei Kardanwellen angebracht zu werden, wobei das Kardangelenk Folgendes umfasst:
einen Zahnkranz (12), der angepasst ist, mit den beiden Kardanwellen verbunden zu werden;
kugelförmiges Gelenkstützelement (20), das im Zentrum des Zahnkranzes (12) positioniert ist, wobei das kugelförmige Gelenkstützelement (20) aus einer Kugel (23) und einem kugelförmigen Buchsenstück (22) besteht, welches eine Buchsengeometrie aufweist, die sich für die Kugel (23) eignet, und wobei die Kugel (23) und das kugelförmige Buchsenstück (22) übereinander gleiten können,
wobei das Kardangelenk (1) **dadurch gekennzeichnet ist, dass** zur Übertragung von Axialkräften mittels des kugelförmigen Stützelements (20) der Mittelpunkt (M) des kugelförmigen Gelenkstützelements (20) mit dem Mittelpunkt (M) für das Biegen des Kardangelenks (1) übereinstimmt und das kugelförmige Gelenkelement (20) bei Betrieb in axialer Richtung relativ zu jeder der beiden Kardanwellen befestigt ist.

2. Kardangelenk (1) nach Anspruch 1, **dadurch gekennzeichnet, dass** es ferner umfasst:
zwei Bügelteile (10, 11), die mit dem Zahnkranz (12) verbunden sind, wobei die beiden Bügelteile (10, 11) jeweils am Einlass und am Auslass des Kardangelenks (1) angeordnet sind, und wobei das kugelförmige Gelenkstützelement (20) homozentrisch (M) mit den beiden Bügelteilen (10, 11) verbunden ist.

3. Kardangelenk (1) nach Anspruch 1 bis 2, **dadurch gekennzeichnet, dass**:
es den vom Zahnkranz (12) auf den Zahnkranzlagern (13) erzeugten Schub (32) mittels homozentrischer Drehung des Flanschbügels (10) und des Rohrbügels (11) blockiert.

## Revendications

1. Joint de cardan (1) qui est conçu pour être placé sur deux arbres à cardan afin de transmettre le mouvement de rotation et le couple sur des véhicules à moteur, le joint de cardan comprenant : un croisillon (12) qui est conçu pour être relié aux deux arbres à cardan ; un élément support de joint sphérique (20) qui est positionné au centre du croisillon (12), ledit élément support de joint sphérique (20) se composant d'une sphère (23) et d'une pièce femelle de manchon sphérique (22) qui possède une géométrie de manchon qui est adaptée à ladite sphère (23), et ladite sphère (23) et ladite pièce femelle de manchon sphérique (22) pouvant coulisser l'une sur l'autre, le joint de cardan (1) étant **caractérisé en ce que**, afin que des forces axiales soient transférées au moyen de l'élément support de joint sphérique (20), le centre (M) de l'élément support de joint sphérique (20) coïncide avec le centre (M) de la courbure du joint de cardan (1) et l'élément de joint sphérique (20) est fixé suivant la direction axiale par rapport à chacun des deux arbres à cardan lors du fonctionnement.

2. Joint de cardan (1) selon la revendication 1, **caractérisé en ce qu'**il comprend en outre : deux pièces de culasse (10,11) qui sont reliées au croisillon (12), lesdites deux pièces de culasse (10,11) étant situées respectivement à l'entrée et à la sortie du joint de cardan (1), et ledit élément support de joint sphérique (20) étant relié de manière homocentrique (M) aux deux pièces de culasse (10,11).

3. Joint de cardan (1) selon la revendication 1 ou 2, et étant **caractérisé en ce que** : il bloque la poussée (32) créée sur les paliers de croisillon (13) par le croisillon (12) au moyen de la rotation homocentrique d'une mâchoire à flasque (10) et d'une fourche de tube (11).
